# EUROPÄISCHE PATENTSCHRIFT

(11) **EP 2 761 075 B1**
(45) Veröffentlichungstag und Bekanntmachung des Hinweises auf die Patenterteilung: **04.07.2018**
(21) Anmeldenummer: 12759436.4
(22) Anmeldetag: 14.09.2012
(51) Int. Cl.: H02K 5/04, D06F 37/20, H02K 5/26

(54) **ANORDNUNG MIT EINEM LAUGENBEHÄLTER EINER WASCHMASCHINE UND EINEM ANTRIEBSMOTOR SOWIE WASCHMASCHINE**
ARRANGEMENT HAVING A WASHING MACHINE TUB AND A DRIVE MOTOR, AND WASHING MACHINE
AGENCEMENT COMPORTANT UN CONTENANT DE LESSIVE D'UNE MACHINE À LAVER ET UN MOTEUR D'ENTRAÎNEMENT, AINSI QUE MACHINE À LAVER

(30) Priorität: 28.09.2011 DE 102011083652
(43) Veröffentlichungstag der Anmeldung: 06.08.2014
(73) Patentinhaber: BSH Hausgeräte GmbH, 81739 München (DE)
(72) Erfinder: BÖTTGER, Torsten, 01445 Radebeul (DE); SCHUBERT, Wolfram, 18435 Stralsund (DE); SKRIPPEK, Jörg, 14641 Wustermark (DE)
(86) Internationale Anmeldenummer: PCT/EP2012/068123
(87) Internationale Veröffentlichungsnummer: WO 2013/045296

(56) Entgegenhaltungen:
- EP-A1- 1 424 427
- EP-A1- 1 707 660
- DE-T2- 68 915 637
- GB-A- 2 104 110

## Beschreibung

Die Erfindung betrifft eine Anordnung mit einem Laugenbehälter einer Waschmaschine und einem Antriebsmotor, der mit einer Aufhängevorrichtung mit dem Laugenbehälter verbindbar ist, wobei die Aufhängevorrichtung als 2-Punkt-Anbindung ausgebildet ist. Des Weiteren betrifft die Erfindung auch eine Waschmaschine mit einer derartigen Anordnung.

Aus der EP 1 424 427 A1 ist eine Waschmaschine bekannt, wobei am Laugenbehälter zwei Fortsätze angebracht sind, an denen vier Fortsätze des Motorgehäuses in der Weise befestigt sind, dass antriebsseitig zwei Paare von Fortsätzen unmittelbar miteinander verbunden werden können. Die beiden übrigen Fortsätze des Motorgehäuses können über ein Zwischenstück mit dem einzigen korrespondierenden Fortsatz am Laugenbehälter verbunden sein, welches Zwischenstück zu den Fortsätzen am Motorgehäuse hinweisende Zapfen trägt und mit einem entgegen der Richtung weisenden Zapfen in einem Loch des laugenbehälterseitigen Fortsatzes lagert. Dieses Zwischenstück trägt zwar zum allgemeinen Toleranzausgleich und zur Schwingungsdämpfung bei. Da es aber auf diese Weise insbesondere beim Schleudergang der Waschmaschine sehr starken Wechselbelastungen ausgesetzt ist, kann es verstärkt zum Bruch des Zwischenstücks kommen, was zum sofortigen Totalausfall der betroffenen Waschmaschine führt.

Des Weiteren ist aus der EP 1 707 660 A1 eine Anordnung bekannt, bei der an einem Laugenbehälter Arme ausgebildet sind, die zur Aufnahme einer Welle eines Motors vorgesehen sind. Die Welle wird dabei mit einem ersten Ende an dem ersten Arm befestigt, wobei das gegenüberliegende Ende der Welle an dem zweiten Arm befestigt wird. Die Achse der Welle ist daher stets parallel bzw. koaxial zu einer Verbindungsgeraden zwischen den beiden Armen orientiert. Die Anbringung des Motors ist diesbezüglich im Hinblick auf die Zugänglichkeit und Montage unzureichend. Eine derartige 2-Punkt-Anbindung ist daher für die Verschleißarmut des Motors, insbesondere der Welle, nachteilig.

Es ist Aufgabe der vorliegenden Erfindung, eine Anordnung sowie eine Waschmaschine zu schaffen, bei der die 2-Punkt-Anbindung eines Motors an den Laugenbehälter verbessert ist.

Diese Aufgabe wird durch eine Anordnung und eine Waschmaschine gemäß jeweiligem unabhängigem Patentanspruch gelöst. Bevorzugte und vorteilhafte Ausgestaltungen der Erfindung sind Gegenstände abhängiger Patentansprüche, nachfolgender Beschreibung sowie der Figuren beigefügter Zeichnung, wobei bevorzugten Ausgestaltungen der Anordnung bevorzugte Ausgestaltungen der Waschmaschine entsprechen und umgekehrt, und dies auch dann, wenn es hierin nicht explizit festgestellt ist.

Bei einer erfindungsgemäßen Anordnung ist demnach vorgesehen, dass diese einen Laugenbehälter einer Waschmaschine und einen Antriebsmotor aufweist. Der Antriebsmotor ist mit dem Laugenbehälter mittels einer Aufhängevorrichtung verbindbar, wobei die Aufhängevorrichtung als 2-Punkt-Anbindung ausgebildet ist. Dies bedeutet, dass die mechanische Befestigung des Antriebsmotors an den Laugenbehälter lediglich nur über zwei Anbindungsstellen erfolgt. An einem Gehäuse des Antriebsmotors sind zwei Schwingen angeordnet, die zur Verbindung mit jeweils einer laugenbehälterseitig angeordneten Schwingenaufnahme ausgebildet sind. Außerdem sind die Schwingen in einem Winkel zu einer Mittelsenkrechten des Antriebsmotors angeordnet sind, insbesondere in einem Winkel zwischen 30° und 60° dazu angeordnet.

Durch eine derartige Ausgestaltung erfolgt die Anbindung des Antriebsmotors an den Laugenbehälter nicht mehr über eine direkte Befestigung über die Antriebswelle, sondern über von dieser beabstandete und von dieser separate Teile. Die oben genannten Nachteile können dadurch vermieden werden.

Durch die angewinkelte Stellung der Schwingen kann einerseits ein besonders stabiles mechanisches Konzept realisiert werden, welches darüber hinaus auch kompakt und platzsparend ausgebildet ist. Insbesondere ist somit vorgesehen, dass die beiden Schwingen in einer V-Form angeordnet sind.

Vorzugsweise sind die drei Achsen parallel zueinander orientiert.

Im verbundenen Zustand der Schwingen mit den Schwingenaufnahmen sei eine Verbindungsgerade zwischen Achsen der Aufnahmen durch ein Kugellager des Antriebsmotors verlaufend orientiert.

Vorzugsweise ist diese Verbindungsgerade senkrecht auf der Achse des Kugellagers stehend angeordnet, so dass quasi diese Verbindungsgerade fluchtend mit dem Kugellager angeordnet ist. Dies ist insbesondere dahingehend besonders vorteilhaft, da somit im Hinblick auf die Gewichtsverteilung die Krafteinwirkung bei der Bewegung des Motors auf die Anbindungsstellen minimiert werden kann. Es ist somit auch eine optimierte Motorschwerpunktlage generierbar.

Vorzugsweise ist vorgesehen, dass die Schwingenaufnahmen zumindest bereichsweise als Kunststoffbuchsen ausgebildet sind. Dadurch kann eine sehr gewichtssparende Ausgestaltung realisiert werden.

Besonders vorteilhaft ist es, wenn der Laugenbehälter zumindest im Bereich der Schwingenaufnahmen glasfaserverstärkt ist oder duroplastisch ausgebildet ist. Dadurch kann gerade im Bereich der Anbindung ein äußerst stabiler Laugenbehälter ermöglicht werden, der die ganz spezifische 2-Punkt-Anbindung ermöglicht und dauerhaft beibehält.

Vorzugsweise ist vorgesehen, dass der Antriebsmotor ein BLDC-Motor (Brushless DC-Motor; bürstenloser Gleichstrommotor; auch als PMS-Motor, "PMS" für "Permanent Magnet Synchronous", bezeichnet) ist. Dies ist dahingehend besonders vorteilhaft, da ein derartiger Motor im Vergleich zu anderen Motoren, beispielsweise einem Universalmotor, ein geringeres Gewicht aufweist. Gerade durch eine derartige spezifische Motorart kann somit die 2-Punkt-Anbindung nochmals begünstigt werden.

Vorzugsweise ist vorgesehen, dass der Antriebsmotor an dem Laugenbehälter angeschraubt ist. Insbesondere mittels eines zusätzlichen Plastikteils kann somit die Befestigung am Laugenbehälter mit Schrauben erfolgen, was insbesondere über die Schwingen und Schwingenaufnahmen erfolgt.

Durch die erfindungsgemäße Anordnung oder eine ihrer vorteilhaften Ausgestaltungen können nun überflüssige Motorhalterungen am Laugenbehälter entfallen bzw. für andere Funktionen oder Bauteile verwendet werden.

Ein bevorzugtes Ausführungsbeispiel der Erfindung wird nachfolgend unter Bezugnahme auf die schematischen Figuren in der beigefügten Zeichnung näher erläutert. Es zeigen:
- Fig. 1: eine perspektivische Darstellung eines Ausführungsbeispiels einer Anordnung mit einem Laugenbehälter und einem Antriebsmotor; und
- Fig. 2: eine Ansicht von unten auf ein Ausführungsbeispiel des Antriebsmotors der Anordnung gemäß Fig. 1.

In den Figuren sind jeweils gleiche oder funktionsgleiche Elemente mit den gleichen Bezugszeichen versehen.

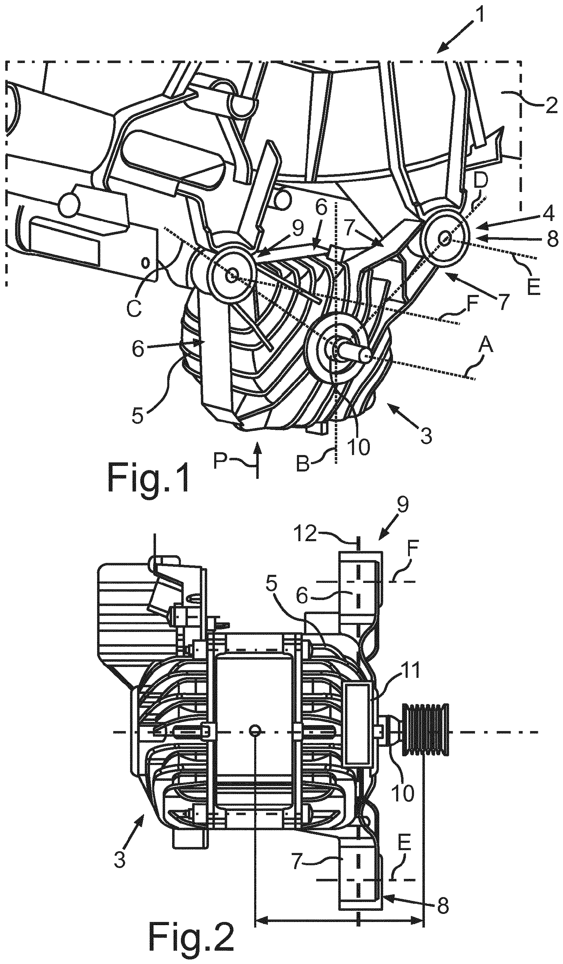

In Fig. 1 ist eine perspektivische Darstellung eine Anordnung 1 gezeigt, die in einer Waschmaschine verbaut ist. Die Anordnung 1 umfasst einen Laugenbehälter 2 und einen Antriebsmotor 3, der im Ausführungsbeispiel als BLDC-Motor ausgebildet ist. Der Antriebsmotor 3 ist mit dem Laugenbehälter 2 über eine Aufhängevorrichtung 4, die als 2-Punkt-Anbindung ausgebildet ist, verbunden. Der Antriebsmotor 3 umfasst ein Gehäuse 5, an dem zwei Schwingen 6 und 7 einstückig angeformt sind.

Der Laugenbehälter 2 umfasst darüber hinaus zwei Schwingenaufnahmen 8 und 9, mit denen die Schwingen 6 und 7 verbunden werden können bzw. in Fig. 1 verbunden sind. Die Schwingenaufnahmen 8 und 9 und/oder die Schwingen 6 und 7 können zumindest teilweise aus Kunststoff ausgebildet sein. Insbesondere ist vorgesehen, dass die Schwingen 6 und 7 an den Schwingenaufnahmen 8 und 9 mittels Schrauben befestigt sind.

Wie darüber hinaus in Fig. 1 zu erkennen ist, weist der Antriebsmotor 3 eine Welle 10 auf, die eine Achse A besitzt. Vertikal verlaufend zu dieser Achse A ist eine Mittelsenkrechte B des Antriebsmotors 3 in Fig. 1 eingezeichnet. Wie zu erkennen ist, weisen die beiden Schwingen 6 und 7 im Wesentlichen eine V-Stellung auf, so dass jede Schwinge 6 und 7 mit ihrer Längsachse C bzw. D einen Winkel zwischen 30° und 60° zur Mittelsenkrechte B aufweist. Zudem ist zu erkennen, dass Achsen E und F der Schwingenaufnahmen 8 und 9 nicht koaxial zur Achse A, insbesondere jedoch parallel dazu angeordnet sind. Werden die Achsen A, E und F jeweils durch senkrecht dazu stehende Geraden verbunden, so wird quasi ein Dreieck gebildet.

In Fig. 2 ist eine Ansicht von unten auf den Antriebsmotor 3 gezeigt. Es ist somit die Blickrichtung in Richtung des Pfeils P in Fig. 1 dargestellt. Die nicht koaxiale jedoch parallele Orientierung der Achsen A, E und F ist zu erkennen. Darüber hinaus ist vorgesehen, dass die Schwingen 6 und 7 derart am Gehäuse 5 angeordnet sind, dass sie in Richtung der Achse A auf Höhe eine Kugellagers 11 des Motors 3 positioniert sind. Dies bedeutet, dass die Aufhängepunkte in Flucht mit dem Kugellager 11 sind. Eine Verbindungsgerade 12 verläuft somit in Richtung der Achse A betrachtet auf Höhe des Kugellagers 11, wobei die Verbindungsgerade 12 als fiktive Verbindung zwischen den Schwingen 6, 7 bzw. den Schwingenaufnahmen 8, 9 verlaufend gezeichnet ist.

Eine besondere Vorteilhaftigkeit ergibt sich bei dieser ganz spezifisch ausgebildeten 2-Punkt-Anbindung in Verbindung mit dem glasfaserverstärkten Laugenbehälter 2 oder einem aus Duroplast zumindest bereichsweise ausgebildeten Laugenbehälter 2 und dem als BLDC-Motor ausgebildeten Antriebsmotor 3.

### Bezugszeichenliste

- 1: Anordnung
- 2: Laugenbehälter
- 3: Antriebsmotor
- 4: Aufhängevorrichtung
- 5: Gehäuse
- 6, 7: Schwingen
- 8, 9: Schwingenaufnahmen
- 10: Welle
- 11: Kugellager
- 12: Verbindungsgerade

## Patentansprüche

1. Anordnung (1) mit einem Laugenbehälter (2) einer Waschmaschine und einem Antriebsmotor (3), der mit einer Aufhängevorrichtung (4) mit dem Laugenbehälter (2) verbindbar ist, wobei die Aufhängevorrichtung (4) als 2-Punktanbindung ausgebildet ist, wobei an einem Gehäuse (5) des Antriebsmotors (3) zwei Schwingen (6, 7) angeordnet sind, die zur Verbindung mit jeweils einer laugenbehälterseitig angeordneten Schwingenaufnahme (8, 9) ausgebildet sind, **dadurch gekennzeichnet, dass** die Schwingen (6, 7) in Richtung einer Achse (A) einer Welle (10) des Antriebsmotors (3) betrachtet auf Höhe eines Kugellagers (11) des Antriebsmotors (3) angeordnet sind, die Schwingen (6, 7) und das Kugellager (10) in einer Ebene senkrecht zur Achse (A) liegen, und dass die Schwingen (6, 7) in einem Winkel zu einer Mittelsenkrechten (B) des Antriebsmotors (3) angeordnet sind, insbesondere in einem Winkel zwischen 30° und 60° dazu angeordnet sind.

2. Anordnung (1) nach Anspruch 1, **dadurch gekennzeichnet, dass** die Achse (A) der Welle (10) und die zwei Achsen (E, F) der Schwingenaufnahmen parallel zueinander orientiert sind.

3. Anordnung (1) nach einem der vorhergehenden Ansprüche, **dadurch gekennzeichnet, dass** die Schwingenaufnahmen (8, 9) zumindest bereichsweise als Kunststoffbuchsen ausgebildet sind.

4. Anordnung (1) nach einem der vorhergehenden Ansprüche, **dadurch gekennzeichnet, dass** der Laugenbehälter (2) zumindest im Bereich der Schwingenaufnahmen (8, 9) glasfaserverstärkt ist oder duroplastisch ausgebildet ist.

5. Anordnung (1) nach einem der vorhergehenden Ansprüche, **dadurch gekennzeichnet, dass** der Antriebsmotor (3) ein BLDC-Motor ist.

6. Anordnung (1) nach einem der vorhergehenden Ansprüche, **dadurch gekennzeichnet, dass** der Antriebsmotor (3) an dem Laugenbehälter (2) angeschraubt ist.

7. Waschmaschine mit einer Anordnung (1) nach einem der vorhergehenden Ansprüche.

## Claims

1. Arrangement (1) comprising a washing machine tub (2) and a drive motor (3) which can be connected to the tub (2) using a suspension device (4), wherein the suspension device (4) is implemented as a 2-point connection, wherein two rockers (6, 7) which are designed for connection to a tub-side rocker mount (8, 9) in each case are disposed on a housing (5) of the drive motor (3), **characterised in that** the rockers (6, 7) when viewed in the direction of an axis (A) of a shaft (10) of the drive motor (3) are disposed at the level of a ball bearing (11) of the drive motor (3), the rockers (6, 7) and the ball bearing (10) are in a plane perpendicular to the axis (A), and the rockers (6, 7) are disposed at an angle with respect to the perpendicular bisector (B) of the drive motor (3), in particular are disposed at an angle of between 30 and 60° with respect thereto.

2. Arrangement (1) according to claim 1, **characterised in that** the axis (A) of the shaft (10) and the two axes (E, F) of the rocker mounts are oriented parallel to one another.

3. Arrangement (1) according to one of the preceding claims, **characterised in that** the rocker mounts (8, 9) are implemented at least sectionally as plastic sleeves.

4. Arrangement (1) according to one of the preceding claims, **characterised in that** the tub (2) is fibre glass reinforced or made of duroplastic material at least in the region of the rocker mounts (8, 9).

5. Arrangement (1) according to one of the preceding claims, **characterised in that** the drive motor (3) is a BLDC motor.

6. Arrangement (1) according to one of the preceding claims, **characterised in that** the drive motor (3) is screwed to the tub (2).

7. Washing machine having an arrangement (1) according to one of the preceding claims.

## Revendications

1. Agencement (1) avec une cuve de lavage (2) d'un lave-linge et un moteur d'entraînement (3), pouvant être relié à la cuve de lavage (2) avec un dispositif de suspension (4), dans lequel le dispositif de suspension (4) est exécuté sous la forme d'une liaison à 2 points, dans lequel deux bras oscillants (6, 7) sont disposés sur une carcasse (5) du moteur d'entraînement (3), lesquels sont exécutés en vue d'une liaison avec un logement de bras oscillant (8, 9) respectif disposé sur le côté de la cuve de lavage, **caractérisé en ce que** les bras oscillants (6, 7) sont disposés, vu dans le sens d'un axe (A) d'un arbre (10) du moteur d'entraînement (3), à hauteur d'un roulement à billes (11) du moteur d'entraînement (3), **en ce que** les bras oscillants (6, 7) et le roulement à billes (10) se trouvent dans un plan perpendiculaire à l'axe (A), et **en ce que** les bras oscillants (6, 7) sont disposés selon un angle par rapport à une médiatrice (B) du moteur d'entraînement (3), en particulier selon un angle entre 30° et 60° par rapport à celle-ci.

2. Agencement (1) selon la revendication 1, **caractérisé en ce que** l'axe (A) de l'arbre (10) et les deux axes (E, F) des logements de bras oscillant sont orientés parallèlement l'un à l'autre.

3. Agencement (1) selon l'une des revendications précédentes, **caractérisé en ce que** les logements de bras oscillant (8, 9) sont exécutés au moins par endroits sous la forme de douilles en plastique.

4. Agencement (1) selon l'une des revendications précédentes, **caractérisé en ce que** la cuve de lavage (2) est renforcée à la fibre de verre ou exécutée en duroplastique au moins dans la zone des logements de bras oscillant (8, 9).

5. Agencement (1) selon l'une des revendications précédentes, **caractérisé en ce que** le moteur d'entraînement (3) est un moteur BLDC.

6. Agencement (1) selon l'une des revendications précédentes, **caractérisé en ce que** le moteur d'entraînement (3) est vissé à la cuve de lavage (2).

7. Lave-linge avec un agencement (1) selon l'une des revendications précédentes.
